Europäisches Patentamt

European Patent Office

Office européen des brevets

(19)

(11) EP 0 626 556 B1

(12) **FASCICULE DE BREVET EUROPEEN**

(45) Date de publication et mention
de la délivrance du brevet:
**16.12.1998 Bulletin 1998/51**

(51) Int Cl.6: **F42B 10/66**, F02K 9/90

(21) Numéro de dépôt: **94400951.3**

(22) Date de dépôt: **03.05.1994**

(54) **Système de pilotage d'un aéronef par interception du jet propulsif**

Flugzeugsteuerungssystem mit Ablenkung des Treibgasstrahles

Aircraft steering systems by interception of the propulsive jet

(84) Etats contractants désignés:
**BE CH DE ES GB IT LI NL PT SE**

(30) Priorité: **28.05.1993 FR 9306444**

(43) Date de publication de la demande:
**30.11.1994 Bulletin 1994/48**

(73) Titulaire: **AEROSPATIALE Société Nationale
Industrielle
75016 Paris (FR)**

(72) Inventeur: **Ansaldi, Jean-Baptiste
F-91400 Orsay (FR)**

(74) Mandataire: **Bonnetat, Christian
CABINET BONNETAT
29, rue de St. Pétersbourg
75008 Paris (FR)**

(56) Documents cités:
GB-A- 1 158 258          US-A- 3 066 653
US-A- 3 069 852          US-A- 4 131 246

## Description

La présente invention concerne un système de pilotage d'un aéronef tournant sur lui-même et propulsé par un jet propulsif.

Quoique non exclusivement, la présente invention est plus particulièrement appropriée au pilotage d'un missile.

Par exemple par les documents GB-A-1 158 258 et US-A-4 131 246 dont l'exposé couvre le préambule de la revendication 1, on connaît déjà un système de pilotage d'un aéronef qui tourne sur lui-même et qui est propulsé par un jet propulsif, comportant un organe d'interception mobile qui, lors de chaque rotation de l'aéronef, est successivement mis dans chacune de deux positions différentes :

- une position active, dans laquelle il intercepte ledit jet propulsif sur une première surface d'interception ; et
- une position passive, dans laquelle il est écarté dudit jet propulsif.

Ainsi, le pilotage du missile tournant sur lui-même peut être effectué à l'aide de l'intercepteur mobile susceptible d'être placé dans le jet propulsif le long d'un même angle d'interception lors de chaque tour de rotation du missile, ce qui engendre une force latérale permettant de manoeuvrer le missile dans la direction de la bissectrice de cet angle d'interception.

Toutefois, l'efficacité d'un tel système de pilotage est réduite, étant donné que l'interception ne peut excéder un angle relativement faible, afin de ne pas perdre trop de poussée lors de cette interception et, par conséquent, la force latérale de pilotage ainsi engendrée reste, elle aussi, relativement faible.

De plus, dans de nombreux missiles, en particulier lorsque ces missiles présentent plusieurs régimes de propulsion, il est nécessaire d'agencer un contre-déviateur qui est destiné à limiter l'action de l'intercepteur lorsque celle-ci devient trop importante, afin d'éviter la génération d'une force latérale trop élevée, et ceci surtout dans le premier régime de propulsion. Un tel contre-déviateur diminue donc la force latérale effectivement utilisée pour le pilotage, qui devient bien inférieure à la force créée par l'action de l'intercepteur.

En outre, dans un tel système de pilotage connu, la manoeuvrabilité est limitée et elle diminue au cours du temps, en raison de l'augmentation de la marge statique due au recul du centre de gravité lors de la propulsion et, éventuellement, lors du déroulement d'un fil de commande, si le missile est par exemple relié au poste de tir par l'intermédiaire d'un tel fil. Ceci limite, par conséquent, la portée du missile.

On remarquera, par ailleurs, que la manoeuvrabilité, et donc la portée, sont d'autant plus réduites que l'altitude d'utilisation du missile est élevée. En effet, comme la pression statique diminue lorsque l'altitude augmente, le jet propulsif s'élargit et le contre-déviateur réduit alors la force latérale de pilotage et donc la manoeuvrabilité du missile.

La présente invention a pour objet d'augmenter la manoeuvrabilité d'un aéronef pourvu d'un tel système de pilotage, permettant en conséquence d'augmenter sa portée et d'améliorer, en particulier, les performances d'utilisation de celui-ci en altitude.

A cette fin, selon l'invention, le système de pilotage du type rappelé ci-dessus est caractérisé

- en ce qu'il comporte un second organe d'interception mobile, solidaire dudit premier organe d'interception ;
- en ce que, dans ladite position active dudit premier organe d'interception mobile, ledit second organe d'interception mobile est écarté dudit jet propulsif ; et
- en ce que, dans ladite position passive dudit premier organe d'interception mobile, ledit second organe d'interception mobile intercepte ledit jet propulsif sur une seconde surface d'interception inférieure à ladite première surface d'interception.

Ainsi, la mise en place dudit second organe d'interception permet d'augmenter la force latérale de pilotage effective et donc la manoeuvrabilité de l'aéronef. En effet, la force latérale engendrée par ce second organe d'interception est additionnée à celle créée par le premier organe d'interception, en raison de la rotation sur lui-même de l'aéronef et des actions successives desdits deux organes d'interception.

En outre, le fait d'utiliser une seconde surface d'interception réduite par rapport à la première surface d'interception permet d'éviter une perte de poussée axiale trop importante. Tel serait en effet le cas, si les deux surfaces d'interception étaient sensiblement identiques et égales à la première surface d'interception qui est relativement importante.

De plus, l'augmentation de la force latérale de pilotage obtenue grâce à cette seconde surface d'interception réduite est largement suffisante pour résoudre les problèmes de manoeuvrabilité et de portée mentionnés précédemment et pour permettre à l'aéronef d'atteindre les performances recherchées en altitude.

De façon avantageuse, ledit système de pilotage comporte un équipage mobile portant lesdits premier et second organes d'interception. De plus, cet équipage mobile peut tourner autour d'un axe de rotation, sous l'action de bobines électromagnétiques.

On remarquera que l'inertie de l'équipage mobile n'est que légèrement augmentée par l'addition du second organe d'interception et le temps de réponse du système de pilotage n'est que peu affecté par cette inertie supplémentaire.

Afin d'obtenir des première et seconde surfaces d'interception différentes, lesdits premier et second organes d'interception peuvent être identiques et être agencés de façon dissymétrique par rapport au jet propulsif. En variante, lesdits premier et second organes d'interception peuvent présenter des tailles différentes.

Les figures du dessin annexé feront bien comprendre comment l'invention peut être réalisée. Sur ces figures, des références identiques désignent des éléments semblables.

La figure 1 est une vue de face schématique et partielle d'un système de pilotage conforme à l'invention, dans une position active.

La figure 2 est une vue semblable à celle de la figure 1, dans une position passive.

La figure 3 illustre le principe de génération d'une force latérale de pilotage lors d'un tour de rotation de l'aéronef.

La figure 4 est une vue de face schématique et partielle d'un système de pilotage conforme à l'invention, selon un second mode de réalisation.

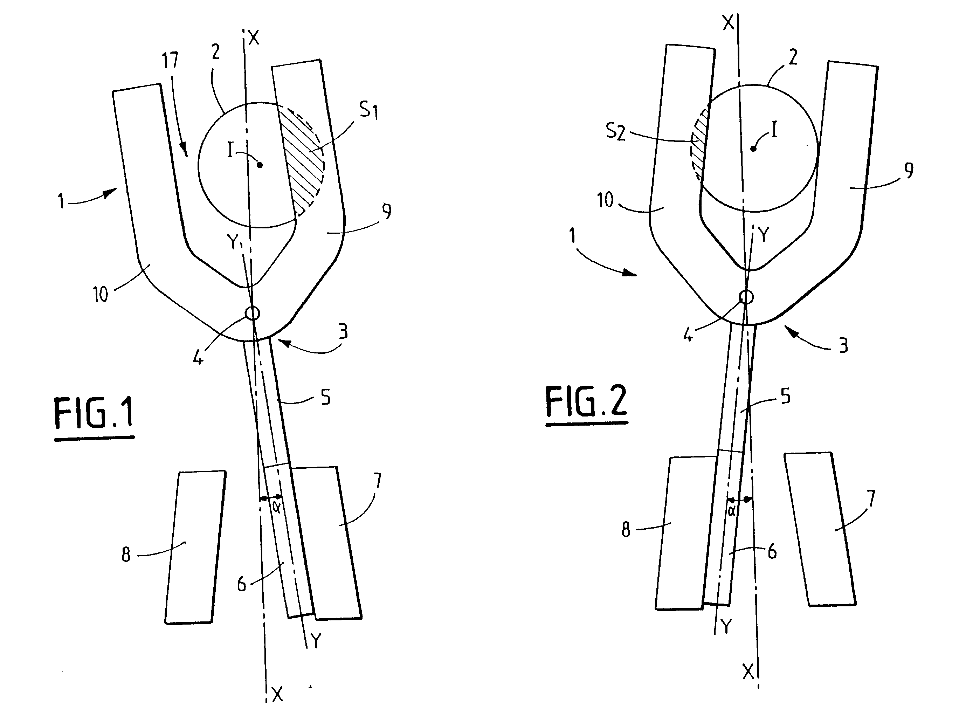

Le système de pilotage 1, conforme à l'invention et représenté sur les figures 1 et 2, est destiné à piloter en couple, par déviation de jet propulsif, un aéronef tournant sur lui-même, dont on n'a représenté sur les figures 1 et 2 que l'ouverture de sortie circulaire 2 d'une tuyère agencée à l'arrière dudit aéronef, symétriquement par rapport au corps de ce dernier, et par laquelle est éjecté le jet propulsif.

Ledit système de pilotage 1 comporte un équipage mobile 3 agencé au niveau de l'ouverture circulaire 2 et susceptible de tourner autour d'un axe de rotation 4 d'un angle $\alpha$, de part et d'autre d'une ligne médiane X-X (représentée en traits mixtes).

Ledit équipage mobile 3 comporte une tige ou palette 5 d'axe Y-Y, dont l'extrémité libre 6 est disposée entre deux bobines électromagnétiques 7 et 8 identiques et agencées symétriquement par rapport à ladite ligne médiane X-X. Lesdites bobines 7 et 8 sont activées par un système de commande (non représenté). L'équipage mobile 3 est, par ailleurs, soumis à l'action d'un ressort de rappel (non représenté) et, ainsi, en fonction de l'activation de l'une ou l'autre desdites bobines 7 et 8, la tige 5 peut être amenée au contact de l'une ou l'autre de ces dernières.

Ledit équipage mobile 3 comporte, de plus, deux organes d'interception 9 et 10 identiques et agencés symétriquement par rapport à l'axe Y-Y de la tige 5, du côté opposé à l'extrémité libre 6 de celle-ci, au niveau de l'ouverture de sortie 2.

Lors de la rotation de l'aéronef, ledit équipage mobile 3 est successivement mis, une fois par tour de rotation, dans chacune de deux positions :

- une position active, pour laquelle la tige 5 est en contact de la bobine 7, tel que représenté sur la figure 1 ; et
- une position passive, pour laquelle la tige 5 est en contact de la bobine 8, tel que représenté sur la figure 2.

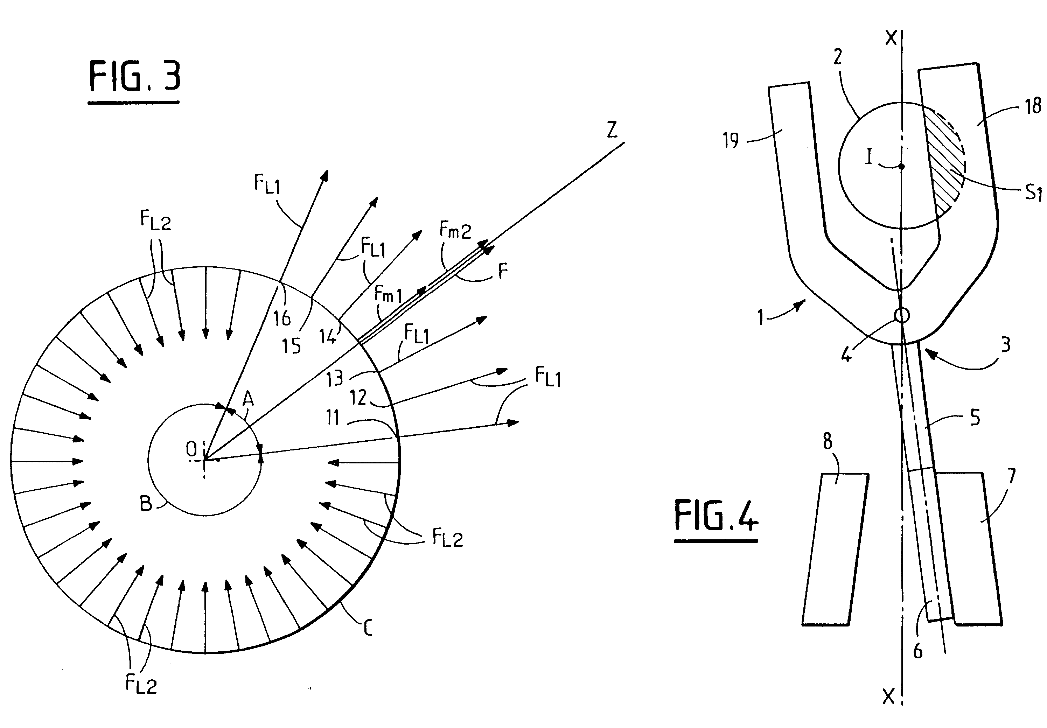

Dans ladite position active, l'organe d'interception 9 de l'équipage mobile 3 intercepte une partie du jet propulsif éjecté à travers l'ouverture 2 de la tuyère, sur une surface d'interception $S_1$ (hachurée sur la figure 1) et engendre ainsi une force latérale $F_{L1}$ de pilotage, tandis que l'organe d'interception 10 est écarté du jet propulsif. Comme l'aéronef tourne sur lui-même, en maintenant pendant un certain temps ledit organe d'interception 9 dans cette position, il intercepte un angle A d'un cercle C, lequel cercle C correspond à la durée d'un tour complet de rotation de l'aéronef, tel que représenté sur la figure 3. Cette interception engendre, à des instants successifs, sur le cercle C, le long de l'arc de cercle défini par l'angle A, des forces radiales de même module $F_{L1}$ (tel que représenté en des points 11 à 16), ledit module $F_{L1}$ dépendant de la surface $S_1$ de jet propulsif intercepté. A partir de ces différentes forces radiales, on obtient une force moyenne $F_{m1}$ dirigée le long de la bissectrice OZ de l'angle A, de module $F_{m1} = 1/\pi \sin(A/2) F_{L1}$. Cette force $F_{m1}$ manoeuvre, par effet de couple, l'aéronef dans la direction de la bissectrice OZ de l'angle A.

On remarquera que les systèmes de pilotage connus (non représentés) comportent généralement un seul organe d'interception, tel que par exemple l'organe d'interception 9. Par conséquent, ces systèmes de pilotage connus engendrent, dans la position active, une force semblable à la force $F_{m1}$. Cependant, ces systèmes connus n'engendrent aucune force de pilotage dans la position passive, contrairement au système de pilotage 1 conforme à l'invention comme on le verra ci-après.

En effet, dans la position passive, tel que représenté sur la figure 2, l'organe d'interception 9 libère complètement l'ouverture de sortie 2 du jet propulsif et n'engendre ainsi aucune force latérale, tandis que l'organe d'interception 10 intercepte, quant à lui, une partie du jet propulsif éjecté à travers l'ouverture 2, sur une surface d'interception $S_2$ (hachurée sur la figure 2) qui est, toutefois, inférieure à la surface d'interception $S_1$ précédente.

Cette interception engendre une force latérale $F_{L2}$ de module inférieur au module de la force $F_{L1}$, puisque la force latérale engendrée lors d'une interception de jet dépend de l'étendue de la surface interceptée. Comme la commutation entre les positions passive et active est effectuée une seule fois par tour de rotation de l'aéronef, l'interception par l'organe d'interception 10 correspond, sur le cercle C, à un angle B tel que $A+B = 2\pi$. On obtient de même, à partir des différentes forces radiales $F_{L2}$, une force moyenne $F_{m2}$ dirigée elle aussi le long de la bissectrice OZ, de module $F_{m2} = 1/\pi \sin(A/2) F_{L2}$.

En effet, l'interception du jet propulsif par l'organe d'interception 10 sur un angle B engendre une force moyenne dirigée le long de la bissectrice de cet angle B. Par ailleurs, d'une part, comme A et B vérifient $A+B = 2\pi$, la bissectrice de B correspond à celle de A (c'est-à-dire OZ) et, d'autre part, comme l'aéronef tourne sur lui-même, l'intercepteur 10 se trouve, dans la position passive, du même côté de l'aéronef que l'organe d'interception 9 dans la position active et, par conséquent, la force engendrée le long de la bissectrice OZ par l'organe d'interception 10 (dans cette position passive) est de même sens que celle engendrée précédemment par l'organe d'interception 9 (dans la position active).

Ainsi, grâce à l'invention, on obtient une force latérale de pilotage F dirigée le long de la bissectrice OZ de module :

$$F = F_{m1} + F_{m2} = 1/\pi \sin(A/2) (F_{L1} + F_{L2}).$$

Cette force de pilotage F est augmentée dans un rapport de $1 + (F_{L2}/F_{L1})$ par rapport à la force de pilotage $F_{m1}$ engendrée par le seul organe d'interception 9, tel qu'on le trouve dans les systèmes de pilotage connus.

On remarquera, en outre, que cette augmentation de la force de pilotage due à l'action du second organe d'interception 10 est obtenue sans modification sensible des conditions de fonctionnement du système de pilotage. En effet :

- la commande de l'aéronef reste inchangée, puisque l'organe d'interception 9 se trouve dans le jet propulsif sur le même angle A, une seule fois par tour de rotation ;
- l'inertie supplémentaire engendrée par le second organe d'interception 10 est réduite ; et
- le temps de réponse du système n'est que peu affecté par cette inertie supplémentaire, d'autant plus que ce temps de réponse dépend, en plus de la racine de l'inertie totale de l'équipage mobile, de la constante de temps électromagnétique et de la raideur du ressort de rappel restées inchangées.

Par conséquent, par l'agencement du second organe d'interception 10, la manoeuvrabilité de l'aéronef augmente, pour une même charge statique, dans un rapport de $1 + (F_{L2}/F_{L1})$. Ledit aéronef est pilotable (c'est-à-dire que la manoeuvrabilité est supérieure à 1 g) plus longtemps et la portée augmente.

On détermine la surface d'interception $S_2$ (et ainsi la force latérale $F_{L2}$) de sorte que la force totale de pilotage F est suffisante pour obtenir 1 g à l'altitude maximale considérée et pour la portée maximale souhaitée.

On remarquera que, lorsque l'aéronef comporte un contre-déviateur (non représenté) associé à l'organe d'interception (principal) 9, on détermine la force totale de pilotage F en tenant compte de la nouvelle valeur de la force $F_{L1}$ réduite par la contre-déviation.

De façon connue, un tel contre-déviateur est agencé de manière à ne présenter qu'une action localisée qui n'est dirigée que contre la force engendrée par l'organe d'interception concerné. Par conséquent, en raison de cette action localisée, la force $F_{L2}$ engendrée par le second organe d'interception 10 n'est pas modifiée, et ceci est vrai, en particulier, lorsque l'altitude augmente et qu'alors le jet propulsif s'élargit et l'action du contre-déviateur devient plus importante.

Conformément à l'invention, pour obtenir une surface d'interception $S_2$ de taille souhaitée inférieure à la surface d'interception $S_1$, on agence l'équipage mobile 3 et les bobines 7 et 8 qui sont symétriques par rapport à la ligne médiane X-X, de sorte que cette ligne médiane X-X soit décalée par rapport au centre I de l'ouverture circulaire 2 (figures 1 et 2). Ainsi, dans la position passive (figure 2), lorsque l'organe d'interception 10 se trouve dans le jet propulsif, l'organe d'interception 9 est en tangence par rapport à l'ouverture circulaire 2. Ce n'est pas le cas dans la position active (figure 1), où il existe un espacement 17 entre l'organe d'interception 10 et ladite ouverture circulaire 2 (lorsque l'organe d'interception 9 se trouve dans le jet propulsif). En raison de cet agencement dissymétrique par rapport à l'ouverture circulaire 2, les surfaces d'interception $S_1$ et $S_2$ sont différentes.

Dans un autre mode de réalisation, tel que représenté sur la figure 4, on agence l'équipage mobile 3 de sorte que la ligne médiane X-X passe par le centre I de l'ouverture circulaire 2. Afin d'obtenir deux surfaces d'interception non équivalentes, on utilise, dans ce cas, deux organes d'interception 18 et 19 de tailles différentes.

**Revendications**

1. Système de pilotage (1) d'un aéronef qui tourne sur lui-même et qui est propulsé par un jet propulsif, comportant un premier organe d'interception mobile (9,18) qui, lors de chaque rotation de l'aéronef, est successivement mis dans chacune de deux positions différentes :

- une position active, dans laquelle il intercepte ledit jet propulsif sur une première surface d'interception ($S_1$) ;
  et
- une position passive, dans laquelle il est écarté dudit jet propulsif,

caractérisé

- en ce qu'il comporte un second organe d'interception mobile (10,19), solidaire dudit premier organe d'interception (9,18) ;
- en ce que, dans ladite position active dudit premier organe d'interception mobile (9,18), ledit second organe d'interception mobile (10,19) est écarté dudit jet propulsif ; et
- en ce que, dans ladite position passive dudit premier organe d'interception mobile (9,18), ledit second organe d'interception mobile (10,19) intercepte ledit jet propulsif sur une seconde

surface d'interception ($S_2$) inférieure à ladite première surface d'interception ($S_1$).

2. Système de pilotage selon la revendication 1, caractérisé en ce qu'il comporte un équipage mobile (3) portant lesdits premier (9,18) et second (10,19) organes d'interception.

3. Système de pilotage selon la revendication 2, caractérisé en ce que ledit équipage mobile (3) est rotatif, autour d'un axe de rotation (4), sous l'action de bobines électromagnétiques (7,8).

4. Système de pilotage selon l'une des revendications 1 à 3, caractérisé en ce que lesdits premier (9) et second (10) organes d'interception sont identiques et en ce qu'ils sont agencés de façon dissymétrique par rapport audit jet propulsif.

5. Système de pilotage selon l'une des revendications 1 à 3, caractérisé en ce que lesdits premier (18) et second (19) organes d'interception présentent des tailles différentes.

## Patentansprüche

1. Steuerungssystem (1) für ein sich um seine Achse drehendes Fluggerät, das von einem Treibgasstrahl angetrieben wird, mit einem ersten beweglichen Ablenkorgan (9,18), das bei jeder Umdrehung des Fluggeräts nacheinander in jede von zwei unterschiedlichen Stellungen versetzt wird:

   - eine aktive Stellung, in der es den Treibgasstrahl auf einer ersten Ablenkfläche ($S_1$) ablenkt, und
   - eine passive Stellung, in der es vom Treibgasstrahl abgestellt ist,

   dadurch gekennzeichnet,

   - daß es ein zweites bewegliches Ablenkorgan (10,19) hat, das mit dem ersten Ablenkorgan (9,18) verbunden ist,
   - daß das zweite bewegliche Ablenkorgan (10,19) in der aktiven Stellung des ersten beweglichen Ablenkorgans (9,18) vom Treibgasstrahl abgestellt ist, und
   - daß das zweite bewegliche Ablenkorgan (10,19) in der passiven Stellung des ersten beweglichen Ablenkorgans (9,18) den Treibgasstrahl auf einer zweiten Ablenkfläche ($S_2$) ablenkt, die kleiner als die erste Ablenkfläche ($S_1$) ist.

2. Steuerungssystem nach Anspruch 1, dadurch gekennzeichnet, daß es eine bewegliche Vorrichtung (3) hat, die das erste (9,18) und das zweite (10,19) Ablenkorgan umfaßt.

3. Steuerungssystem nach Anspruch 2, dadurch gekennzeichnet, daß die bewegliche Vorrichtung (3) unter der Wirkung von Magnetspulen (7,8) um eine Drehachse (4) drehbar ist.

4. Steuerungssystem nach einem der Ansprüche 1 bis 3, dadurch gekennzeichnet, daß das erste (9) und das zweite (10) Ablenkorgan identisch sind und daß sie asymmetrisch zum Treibgasstrahl angeordnet sind.

5. Steuerungssystem nach einem der Ansprüche 1 bis 3, dadurch gekennzeichnet, daß das erste (18) und das zweite (19) Ablenkorgan von unterschiedlicher Größe sind.

## Claims

1. A steering system (1) for an aircraft rotating about its longitudinal axis on itself and propelled by a propulsive jet including a first mobile interceptor member (9, 18) which, on each rotation of the aircraft, assumes each of two different successive positions:

   - an active position in which it intercepts said propulsive jet over a first interception area ($S_1$); and
   - a passive position in which it is out of said propulsive jet,

   characterised in that

   - it includes a second mobile interceptor member (10, 19) attached to said first interceptor member (9, 18);
   - in said active position of said first mobile interceptor member (9, 18) said second mobile interceptor member (10, 19) is out of said propulsive jet; and
   - in said passive position of said first mobile interceptor member (9, 18) said second mobile interceptor member (10, 19) intercepts said propulsive jet over a second interception area ($S_2$) smaller than said first interception area ($S_1$).

2. A steering system according to claim 1 characterised in that it includes a mobile assembly (3) carrying said first interception member (9, 18) and said second interception member (10, 19).

3. A steering system according to claim 2 characterised in that said mobile assembly (3) is rotatable about a rotation axis (4) by electromagnet coils (7, 8).

4. A steering system according to any one of claims 1 to 3 characterised in that said first interceptor member (9) and said second interceptor member (10) are identical and in that they are asymmetric relative to said propulsive jet.

5. A steering system according to any one of claims 1 to 3 characterised in that said first interceptor member (18) and said second interceptor member (19) are different sizes.

FIG.2

FIG.1

FIG.3

FIG.4